# EUROPÄISCHE PATENTSCHRIFT

(11) **EP 3 862 212 B1**
(45) Veröffentlichungstag und Bekanntmachung des Hinweises auf die Patenterteilung: **25.10.2023**
(21) Anmeldenummer: 21152513.4
(22) Anmeldetag: 20.01.2021
(51) Int. Cl.: B60L 53/12, B60L 58/12

(54) **VERFAHREN ZUM ANORDNEN VON INDUKTIVEN LADEMITTELN IN EINEM LAGER SOWIE LAGER MIT EINER ANORDNUNG VON INDUKTIVEN LADEMITTELN SOWIE FLURFÖRDERZEUG FÜR EIN SOLCHES LAGER**
METHOD FOR ARRANGING INDUCTIVE CHARGING MEANS IN A STORAGE AREA AND STORAGE AREA WITH AN ARRANGEMENT OF INDUCTIVE CHARGING MEANS AND INDUSTRIAL TRUCK FOR SUCH A BEARING
PROCÉDÉ D'AGENCEMENT DES MOYENS DE CHARGEMENT INDUCTIF DANS UN ENTREPÔT, AINSI QU'ENTREPÔT DOTÉ D'UN AGENCEMENT DE MOYENS DE CHARGEMENT INDUCTIF, AINSI QUE CHARIOT DE MANUTENTION POUR UN TEL ENTREPÔT

(30) Priorität: 06.02.2020 DE 102020103109
(43) Veröffentlichungstag der Anmeldung: 11.08.2021
(73) Patentinhaber: Jungheinrich Aktiengesellschaft, 22047 Hamburg (DE)
(72) Erfinder: Petersen, Marinus, 24536 Neumünster (DE)
(74) Vertreter: Hauck Patentanwaltspartnerschaft mbB

(56) Entgegenhaltungen:
- EP-A1- 3 825 163
- DE-A1-102010 005 591
- US-A1- 2016 297 307
- US-A1- 2017 326 995

## Beschreibung

Die vorliegende Erfindung betrifft ein Lager, in dem induktive Lademittel für Flurförderzeuge vorgesehen sind. Insbesondere betrifft die Erfindung ein Verfahren zum Anordnen der induktiven Lademittel in dem Lager sowie das Lager selbst. Ebenfalls betrifft die Erfindung ein Flurförderzeug mit einem induktiv ladbaren Energiespeicher.

Der Energiespeicher von elektrisch betriebenen Flurförderzeugen muss nach der Nutzung des Fahrzeugs wieder aufgeladen werden. In der Umgebung eines Lagers, bei dem das Flurförderzeug zum Einsatz kommt, können daher beispielsweise stationäre Ladegeräte vorgesehen sein. Das Fahrzeug wird nach seiner Benutzung mit ganz oder teilweise entleertem Energiespeicher mit dem Ladegerät verbunden, um den Energiespeicher wieder aufzuladen. Die Verwendung eines Ladekabels hat sich in der Lagerumgebung auch wegen des Platzbedarfs als nachteilig erwiesen. Alternativ zum kabelgebundenen Wiederaufladen des Energiespeichers kann auch ein induktives Laden des stehenden Flurförderzeugs vorgesehen sein. Beim induktiven Laden wird das Flurförderzeug an oder neben dem induktiven Ladegerät abgestellt, um die elektrische Energie induktiv, beispielsweise über eine gebildete Spulenanordnung mit Primär- und Sekundärspule aufzunehmen. Auch hierbei handelt es sich um ein stationäres Laden des Flurförderzeuges, jedoch induktiv und nicht kabelgebunden.

Beabsichtigt man nun, Flurförderzeuge dynamisch und nicht stationär in dem Lager zu laden, so entsteht eine Reihe von technischen Schwierigkeiten, die bei einer Umsetzung bedacht werden müssen. Ein besonderes Problem bei der Umsetzung ist, dass die Fahrwege von Flurförderzeugen in Lagern in der Regel keiner räumlichen Beschränkung unterliegen. Es gibt also nicht, wie beispielsweise im schienengebundenen Verkehr fest vorgegebene Fahrspuren oder Kreuzungsbereiche, die mit Lademitteln zum dynamischen Laden, also zum Laden während des Betriebs des Flurförderzeugs ausgestattet werden können.

Der Begriff des Flurförderzeugs wird nachfolgend im allgemeinen Sinne verstanden, wonach jedes angetriebene, fahrbare Transportmittel in einem Lager als Flurförderzeug verstanden werden kann, insbesondere auch selbstfahrende oder automatisch gelenkte AGVs (automated guided vehicles) werden als Flurförderzeuge angesehen. Bei den induktiven Lademitteln ist inhaltlich zu unterscheiden, in wie fern es sich hierbei um induktive Lademittel für einen stationären Ladevorgang oder um induktive Lademittel handelt, die auch für einen dynamischen Ladevorgang geeignet sind. Grundsätzlich kann es auch induktive Lademittel geben, die stationär und dynamisch eingesetzt werden können.

Aus DE 10 2010 005 591 A1 ist ein Hochregallager bekannt geworden, in dem sich ein Gangwagen und ein Kanalwagen bewegen. Für den Gangwagen ist eine Kurzzeitenergiequelle vorgesehen, die aufgeladen wird, wenn der Gangwagen im Übergabebereich kurzfristig abgestellt ist. US 2017/326995 A1 offenbart ein weiteres Beispiel von Flurförderfahrzeug-induktiven Ladeanordnung.

Der Erfindung liegt die Aufgabe zugrunde, ein Verfahren zum Anordnen von induktiven Lademitteln in einem Lager mit einfachen Mitteln bereitzustellen. Erfindungsgemäß wird die Aufgabe durch ein Verfahren mit den Merkmalen aus Anspruch 1 gelöst. Vorteilhafte Ausgestaltungen bilden die Gegenstände der Unteransprüche.

Das erfindungsgemäße Verfahren ist vorgesehen und bestimmt, um induktive Lademittel in einem Lager anzuordnen. In dem Lager kommen bestimmungsgemäß ein oder mehrere induktiv ladbare Flurförderzeuge zum Einsatz. Das Verfahren ist erfindungsgemäß durch zwei Verfahrensschritte gekennzeichnet:

Im ersten Verfahrensschritt wird ein Zielwert für eine mittlere Ladedauer eines in dem Lager eingesetzten Flurförderzeugs vorgegeben. Die mittlere Ladedauer berechnet eine Zeitdauer, die beispielsweise in Stunden oder als relative Größe wie beispielsweise Stunden pro Schicht ausgedrückt wird. Die mittlere Ladedauer gibt an, für welche Dauer ein in dem Lager eingesetztes Flurförderzeug bei durchschnittlicher Verwendung im Mittel geladen werden kann. Der zweite Verfahrensschritt stellt sicher, dass die induktiven Lademittel derart in dem Lager angeordnet sind, dass das Flurförderzeug bei einem Einsatz in dem Lager mindestens mit dem Zielwert für die mittlere Ladedauer induktiv geladen wird. Die Anordnung der induktiven Lademittel in dem Lager betrifft im Wesentlichen die räumliche Anordnung der induktiven Lademittel in dem Lager. Erfindungsgemäß ist die räumliche Verteilung der induktiven Lademittel in dem Lager so, dass das Flurförderzeug bei seinem Einsatz in dem Lager mindestens mit dem Zielwert für die mittlere Ladedauer induktiv geladen werden kann. Erfindungsgemäß werden also zur Anordnung der induktiven Lademittel in einem Lager zwei Aspekte besonders betrachtet, einerseits der Zielwert für die mittlere Ladedauer und andererseits die Anordnung der induktiven Lademittel in dem Lager. Beides zusammen gestattet es, die Flurförderzeuge zuverlässig bis mindestens zum Zielwert zu laden, so dass das Flurförderzeug nicht nach Ende seiner Benutzung vollständig entladen ist, sondern mindestens mit der mittleren Ladedauer bis zum Zielwert geladen wurde. Bei diesem Verfahren zum Anordnen von Lademitteln hat sich als überraschender Vorteil herausgestellt, dass es zu einer deutlich gleichmäßigeren Lastverteilung für die Entnahme von elektrischer Leistung aus dem Stromversorgungsnetz kommt. War es bisher so, dass nach Schichtende alle Flurförderzeuge gleichzeitig geladen wurden, wodurch eine große Leistungsentnahme aus dem elektrischen Versorgungsnetz erfolgte, so ist die Leistungsentnahme bei Schichtende nunmehr deutlich geringer, da die Flurförderzeuge bereits mit der mittleren Ladedauer geladen wurden.

Erfindungsgemäß wird für mindestens eines von den in dem Lager eingesetzten Flurförderzeugen ein mittlerer Leistungsverbrauch bestimmt und bei festgelegter Ladeleistung der induktiven Lademittel mit dem Zielwert für die mittlere Ladedauer eine Ladequote für den Einsatz des Fahrzeugs in dem Lager bestimmt. Die Bestimmung des mittleren Leistungsverbrauchs für das Flurförderzeug kann beispielsweise durch eine Messung eines oder mehrerer Flurförderzeuge während eines oder mehrerer Einsätze in dem Lager erfolgen. Auch ist es möglich, den mittleren Leistungsverbrauch für ein typisches Flurförderzeug rechnerisch aus in dem Lager abgewickelten Aufträgen zu bestimmen. Ist der mittlere Leistungsverbrauch bestimmt, so kann bei festgelegter Ladeleistung der Lademittel eine Ladequote für den Einsatz des Flurförderzeugs in dem Lager bestimmt werden. Bei festgelegter Ladeleistung der Lademittel bedeutet in dem Fall, in dem die Lademittel alle dieselbe Ladeleistung besitzen, dass die Ladeleistung eines einzelnen Lademittelns verwendet wird. Besitzen die Lademittel unterschiedliche Ladeleistung, so stellt diese Größe auf einen Mittelwert der unterschiedlichen Ladeleistung ab. Die so ermittelte Ladequote gibt als Bruchteil an, das Verhältnis von Leistungsverbrauch und Ladeleistung. Besitzt das Flurförderzeug beispielsweise zu Beginn einer Schicht eine vollgeladene Batterie, so gibt die Ladequote den Ladezustand der Batterie bei Beendigung der Schicht an.

Die Ladequote eignet sich dazu, die Anzahl von induktiven Lademitteln festzulegen. Dies bedeutet, besitzt der Energiespeicher eine Ladekapazität und ist dessen Ladequote bekannt, so kann leicht die Anzahl der erforderlichen induktiven Lademittel festgelegt werden.

Die Lademittel werden beginnend mit dem Bereich bestimmt, der die höchste mittlere Aufenthaltsdauer besitzt, nach diesem Bereich, wird als nächstes der Bereich mit absteigender mittlerer Aufenthaltsdauer mit induktiven Lademitteln ausgestattet. Auf diese Weise werden die induktiven Lademittel in dem Lager mit absteigender mittlerer Aufenthaltsdauer verteilt.

Eine bevorzugte Weiterbildung des Verfahrens stellt darauf ab, dass die induktiven Lademittel nach Anzahl und Position derart im Lager verteilt sind, dass das Flurförderzeug bei einem Einsatz in dem Lager mindestens mit dem Zielwert für die mittlere Ladedauer induktiv geladen werden kann. Um den Zielwert für die mittlere Ladedauer erreichen zu können, ist neben der räumlichen Anordnung der induktiven Lademittel im Lager auch die Anzahl der induktiven Lademittel ausschlaggebend. Hier ist zu berücksichtigen, dass bei dem erfindungsgemäßen Verfahren und den ihm zugrundeliegenden Überlegungen man stets davon ausgeht, dass der Betrieb der Flurförderzeuge unter rein lagertechnisch vorgegebenen Gesichtspunkten erfolgt und nicht eingeschränkt oder abgewandelt werden soll, um den Zielwert für die mittlere Ladedauer zu erreichen.

Bevorzugt wird auch neben Anzahl und Position auf die Ladeleistung der induktiven Lademittel geachtet, so dass das Flurförderzeug bei seinem Einsatz in dem Lager mindestens mit einem Zielwert für eine mittlere Ladeleistung induktiv geladen werden kann. Wichtig hierbei ist der Begriff der mittleren Ladeleistung, der die Leistung bezeichnet, die von einem in dem Lager eingesetzten Flurförderzeug bei durchschnittlicher Verwendung im Mittel beim Laden aufgenommen wird. Dies hängt natürlich davon ab, welche Leistung von dem induktiven Lademittel pro Zeiteinheit abgegeben werden und welche Ladeleistung von dem Flurförderzeug pro Zeiteinheit aufgenommen werden kann.

In einer bevorzugten Ausgestaltung des erfindungsgemäßen Verfahrens wird das Lager in eine Anzahl von Bereichen eingeteilt. Die Bereiche sind nach einem oder mehreren Kriterien bestimmt. Ein erstes Kriterium stellt darauf ab, dass die eingeteilten Bereiche eine örtlich homogen verteilte mittlere Bereichsaufenthaltsdauer aufweisen. Ein weiteres Kriterium besteht darin, die Bereiche in Funktionsbereiche des Lagers einzuteilen, insbesondere in Bereiche, in denen das Flurförderzeug sich überwiegend stehend oder fahrend aufhält. Ein weiteres mögliches Kriterium für das Einteilen der Bereiche besteht darin, das Lager in Verlade-, Übergabe- und Verbindungsbereiche einzuteilen. Die drei vorstehenden Kriterien können bei ihrer Anwendung einzeln oder auch in Kombination unterschiedliche Bereiche für das Lager ergeben. Wird auf das Kriterium mit der örtlich homogen verteilten mittleren Aufenthaltsdauer abgestellt, so entstehen in dem Lager Bereiche, in denen die mittlere Aufenthaltsdauer für einen Ort homogen verteilt ist. Eine homogene Verteilung liegt beispielsweise vor, wenn die Varianz klein ist oder beispielsweise mit zunehmender Fläche des Bereichs abfällt. Das zweite Kriterium unterscheidet Funktionsbereiche in dem Lager, wobei beispielsweise zwischen Bereichen, in denen die Flurförderzeuge überwiegend stehen und Bereichen, in denen die Flurförderzeuge sich überwiegend bewegen, unterschieden werden kann. Das dritte Kriterium stellt in gewissem Sinne ebenfalls auf Funktionsbereiche ab, allerdings nicht im Hinblick auf stehende oder fahrende Flurförderzeuge, sondern hier im Hinblick auf Aufgaben und Funktionen, die den Flurförderzeugen zugewiesen werden. Anhand der vorgenommenen Einteilung der Bereiche kann untersucht werden, welchen Beitrag die einzelnen Bereiche zur Erreichung des Zielwerts liefern. Hiervon ausgehend kann die Verteilung der induktiven Lademittel und deren Auswahl für die Bereiche vorgenommen werden, bis der vorgegebene Zielwert sicher erreicht ist.

Besonders bevorzugt wird, nachdem eine Anordnung der induktiven Lademittel gefunden wurde, diese überprüft, indem entweder durch Messen oder durch eine Simulation festgestellt wird, ob für das Flurförderzeug der mittlere Zielwert der Ladeleistung bei einem typischen Einsatz im Lager erreicht wird. Sollte dies nicht der Fall sein, sind zusätzliche induktive Lademittel in dem Lager so lange anzuordnen, bis der Zielwert erreicht ist.

In einer besonders bevorzugten Ausgestaltung kommen in dem Lager neben den induktiven Lademitteln auch stationäre Lademittel zum Einsatz. Bei dieser Ausgestaltung ist eine erste Anzahl von Flurförderzeugen mit jeweils einer bekannten Dimension ihres induktiv ladbaren Energiespeichers und eine zweite Anzahl von induktiven Lademitteln mit jeweils einer bekannten Ladekapazität vorgegeben. Eine dritte Anzahl von stationären Lademitteln wird derart bestimmt, dass jedes der mit mindestens dem Zielwert geladenen Flurförderzeuges in einer vorbestimmten Ladezeit für ein stationäres Laden mit der zweiten Anzahl an Lademitteln vollständig geladen wird. Die vorbestimmte Ladezeit kann beispielsweise eine Schichtpause sein, so dass bei dem Zusammenspiel von induktiven Lademitteln und stationären Ladegeräten am Ende der Schichtpause sämtliche Flurförderzeuge vollständig geladen sind.

In einer bevorzugten Ausgestaltung kann für die Lademittel zwischen stationären und dynamischen Lademitteln unterschieden werden. Bevorzugt wird eine Anzahl von stationären Lademitteln derart bestimmt, dass eine Anzahl der (dynamischen) induktiven Lademittel für den Ladevorgang während des Betriebs unter Beibehaltung des Zielwerts für die mittlere Ladedauer reduziert werden kann. Die Überlegung hierbei ist, dass möglicherweise die Anzahl an erforderlichen induktiven Lademittel, die während des Betriebs des Flurförderzeugs eingesetzt werden können, reduziert werden kann, so dass die Hinzunahme von einigen stationären Ladegeräten weiterhin es erlaubt, den Zielwert für die mittlere Ladedauer beizubehalten. Für die Bestimmung der Anzahl der stationären Lademittel kann das oder mehrere der nachfolgenden Kriterien verwendet werden. Einerseits kann eine Belegung für stationäre Lademittel durch Flurförderzeuge berücksichtigt werden. Bei der Belegung kann auf eine durchschnittliche Belegung und/oder eine maximale Belegung der stationären Lademittel durch die Flurförderzeuge abgestellt werden. Diese Belegungen können wieder im praktischen Einsatz gemessen oder rechnerisch ermittelt werden. Ein weiteres Kriterium für die Anzahl von stationären Lademitteln ist die Gesamtzahl der eingesetzten Flurförderzeuge. Steigt die Gesamtzahl der Flurförderzeuge, so kann durch die Hinzunahme einige stationärer Lademittel der Zielwert unverändert beibehalten werden, ohne dass die Verteilung der dynamischen induktiven Lademittel geändert werden muss.

Mit dem erfindungsgemäßen Verfahren kann ein Lager bereitgestellt werden. Das Lager besitzt eine Anordnung von induktiven Lademitteln, über die ein in dem Lager eingesetztes Flurförderzeug induktiv geladen werden kann. Die Lademittel in dem Lager sind dabei derart angeordnet, dass die in dem eingesetzten Flurförderzeug erzielte Ladedauer mindestens dem Zielwert entspricht. Die Anordnung der induktiven Lademittel in dem Lager schafft hierbei die Möglichkeit, für das eingesetzte Flurförderzeug seinen Zielwert zu erreichen. Der Zielwert gibt den Wert an, der in einem zeitlichen Mittel bei einer durchschnittlichen Verwendung des Flurförderzeugs erreicht wird, der aber bei einer nicht durchschnittlichen Verwendung des Flurförderzeugs auch unterschritten werden kann.

In einer bevorzugten Weiterbildung des Lagers ist ein Bodenbereich in dem Lager mit induktiven Lademitteln bedeckt, während ein zweiter Bodenbereich in dem Lager frei von induktiven Lademitteln ist. Es ist also vorgesehen, dass nur ein Teil des Lagers mit induktiven Lademitteln ausgestattet ist, um den Zielwert für das Laden des Flurförderzeugs im Einsatz zu erreichen. Bevorzugt ist dabei der mit induktiven Lademitteln versehene Bodenbereich nicht ein einzelner zusammenhängender Bereich, sondern unterteilt sich in mehrere Bereiche, in denen die induktiven Lademittel vorgesehen sind.

Ein für das obige Lager geeignetes Flurförderzeug ist mit einem induktiv ladbaren Energiesprecher ausgestattet, der auch bei einem Einsatz des Flurförderzeugs von einem im Lager verlegten induktiven Lademittel aufladbar ist. Für das Flurförderzeug ist ein Zielwert für eine mittlere Ladedauer des in dem Lager eingesetzten Flurförderzeugs vorgesehen, wobei die Kapazität seines Energiespeichers derart bemessen ist, dass das Flurförderzeug bei seinem Einsatz in dem Lager mindestens mit dem Zielwert für die mittlere Ladedauer induktiv geladen werden kann. Bei dem erfindungsgemäßen Flurförderzeug ist also die Kapazität seines Energiespeichers dafür angepasst, den Zielwert für die mittlere Ladedauer zu erfüllen. Bevorzugt sind die induktiven Lademittel derart in dem Lager räumlich angeordnet, dass das Flurförderzeug bei seinem Einsatz in dem Lager mindestens mit dem Zielwert für die mittlere Ladedauer induktiv geladen werden kann.

Die vorstehende Erfindung wird nachfolgend an einem Ausführungsbeispiel näher erläutert. Es zeigen:
- Fig. 1: den Verfahrensschritt zur Auslegung eines induktiven Ladesystems für Flurförderzeuge in der Intralogistik mit dem Schritt des Einteilens von Lagerbereichen,
- Fig. 2: die normierte, auf die Fläche bezogene Aufenthaltsdauer für unterschiedliche Aufteilungen der Lagerbereiche,
- Fig. 3: eine Realisierung, bei der Ladespulen im Bereich 4 verlegt sind,
- Fig. 4: eine Visualisierung von einem induktiven Ladesystem mit zwei Ladebereichen und einem Blocklager.

Mit dem beispielhaft beschriebenen Verfahren zur Anordnung von induktiven Lademitteln in einem Lager kann rechnerisch ermittelt werden, ob der Einsatz eines induktiven Ladesystems bei einem spezifischen Lager und dessen Nutzung technisch und wirtschaftlich möglich ist. Bei dem Verfahren wird ermittelt, sei es rechnerisch, durch Simulation oder auch durch Messung, wie viele und welche Bereiche eines Lagers mit induktiven Ladespulen ausgestattet werden müssen, um zu erreichen, dass die gewünschte Energieversorgung des Flurförderzeugs über Ladespulen während des Einsatzes im Lager möglich ist. Hierbei kann der vorgegebene Zielwert für die mittlere Ladedauer so hoch gewählt werden, dass auf eine konventionelle Ladung des stehenden Fahrzeugs verzichtet werden kann, wodurch ein Non-Stop-Betrieb rund um die Uhr und ohne Pause möglich ist. Es ist aber auch möglich, Zielwerte für die mittlere Ladedauer vorzugeben, die einen zusätzlichen Einsatz von stationären Lademitteln erlaubt.

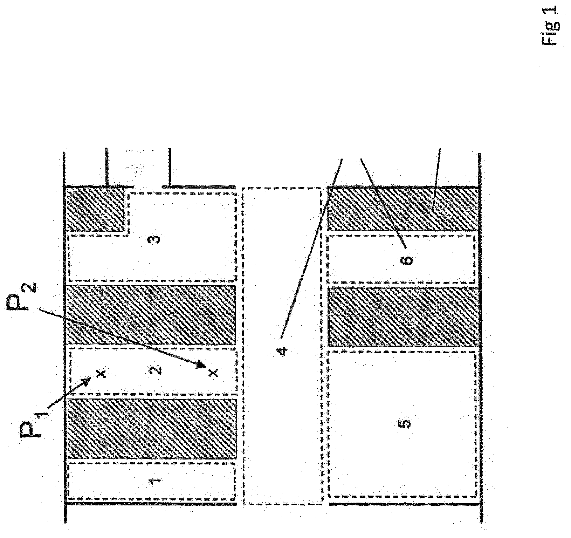

Figur 1 zeigt einen ersten Schritt, bei dem das Lager in sechs Bereiche eingeteilt wird. Die Zahl 6 ist in diesem Ausführungsbeispiel beispielhaft gewählt, es können auch mehr oder weniger Bereiche für das Lager gewählt werden. Typischerweise wird ein Lager in deutlich mehr als sechs Bereiche eingeteilt. Für die spätere Umsetzung mit induktiven Lademitteln empfiehlt es sich, wenn die Bereiche einfach zusammenhängende Gebiete sind und sich technisch für ein Verlegen der induktiven Lademittel von ihren Nachbarbereichen abgrenzen lassen. Der Bereich 4 zeigt beispielsweise einen Gangbereich, der von den Regalbereichen 1, 2 und 6 abgegrenzt ist. Im weiteren Verlauf wird die mittlere Aufenthaltsdauer in den Bereichen, also die sogenannte mittlere Bereichsaufenthaltsdauer ermittelt. Hierzu wird beispielsweise für die Punkte P₁ und P₂ festgestellt, wie lange insgesamt ein sich im Bereich 2 befindliches Flurförderzeug sich in einem dieser Punkte oder dessen Nachbarschaft aufhält. Hieraus ergibt sich eine Aufenthaltsdauer, die beispielsweise auch als eine Aufenthaltswahrscheinlichkeit verstanden wird. Die Aufenthaltsdauer wird stets als eine mittlere Aufenthaltsdauer bzw. Bereichsaufenthaltsdauer betrachtet, da es keine zeitlich festen Vorgaben für die Aufenthaltsdauer in dem Bereich gibt. Anders als bei einer Straße oder Kreuzung gibt es hier keine äußeren Vorgaben, die einen Aufenthalt in einem Punkt P₁ oder P₂ festlegen, vielmehr ergibt sich die mittlere Aufenthaltsdauer aus einer durchschnittlichen Nutzung des Lagers durch das Flurförderzeug, den Warenstrom in und aus dem Lagerort heraus und die vorgegebenen Lagerplätze in dem Lager. Grundsätzlich würde man im Hinblick auf die Punkte P₁ und P₂ erwarten, dass der Punkt P₂ eine größere, mittlere Aufenthaltsdauer besitzt als der Punkt P₁, beispielsweise weil ein Flurförderzeug oder ein AGV in P₂ wartet, bevor es in den Bereich 4 einbiegen kann. Auch bei einer Lagerplanung beispielsweise unter Verwendung eines Lagerverwaltungssystems werden für die Lagerführung möglichst effizient verlaufende und kurze Wege angestrebt. In der Konsequenz werden die Regalplätze in der Nähe des Ganges 4 bei der Planung zuerst und bevorzugt belegt, was zu einer größeren Aufenthaltswahrscheinlichkeit im Bereich P2 führt.

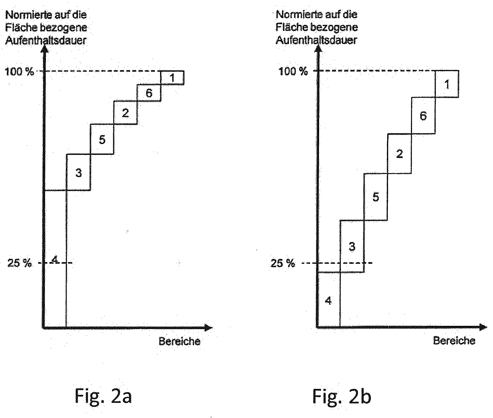

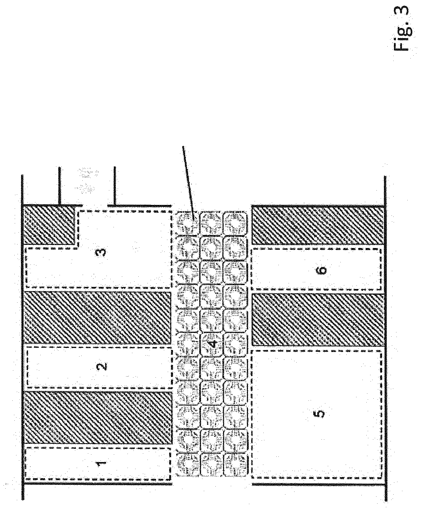

Neben der mittleren Aufenthaltsdauer innerhalb der Bereiche kann auch ermittelt werden, inwieweit die unterschiedlichen Bereiche 1 bis 6 eine örtlich homogen verteilte mittlere Bereichsaufenthaltsdauer aufweisen. Dies bedeutet beispielsweise, dass der Bereich 4 über seine gesamte Fläche eine homogene Aufenthaltsdauer besitzt, die in den Orten nicht zu stark voneinander abweicht. Ein Kriterium für die Homogenität kann beispielsweise über die Varianz der Verteilung und deren Skalierung mit der Fläche oder der Anzahl der untersuchten Punkte gewonnen werden. Die Figuren 2a und 2b zeigen das Ergebnis dieser Auswertung. Jedem der Bereiche 1 bis 6 kann ein relativer Anteil an der mittleren Aufenthaltsdauer zugeordnet werden, ebenso wie ein Anteil an der insgesamt zur Verfügung stehenden Lagerfläche. So besitzt beispielsweise der Bereich 4 die Fläche A4 und die mittlere Aufenthaltsdauer D4. Alle Aufenthaltsdauern D1, ... D6 sind auf 100 % normiert, was zum Ausdruck bringt, dass nur in dem Lager befindliche Flurförderzeuge betrachtet werden. Die Summe der Flächen A1 bis A6 ergibt die Gesamtlagerfläche. Aus den Figuren wird deutlich, dass, wenn beispielsweise ein Zielwert von 25 % für die mittlere Ladedauer vorgegeben wird, es ausreicht, den Bereich A teilweise mit induktiven Ladespulen zu versehen. Figur 2b zeigt eine alternative Verteilung von Bereichen 1 bis 6, bei der die Aufenthaltsdauer im Bereich 4 D4' deutlich kleiner ist. Hier ist es für einen Zielwert von 25 % erforderlich, nicht nur den Bereich 4 mit induktiven Lademitteln auszustatten, sondern auch mindestens Teile des Bereichs 3 mit induktiven Lademitteln auszustatten. Für die in Figur 2a dargestellten Bereiche zeigt Figur 3 eine Realisierung, bei der im Bereich 4 induktive Lademittel vorgesehen sind. Diese induktiven Lademittel genügen, da sie den Bereich 4 im Wesentlichen ganz bedecken, aus, um den Zielwert von 25 % deutlich zu überschreiten. Das tatsächliche Erreichen eines Zielwertes von 25 % für die mittlere Ladedauer hängt aber nicht nur von der Anzahl der in dem Bereich verlegten induktiven Lademittel ab, sondern auch von deren Ladeleistung. Diese muss auch im richtigen Verhältnis zu der Kapazität des Energiespeichers des induktiv geladenen Flurförderzeugs stehen.

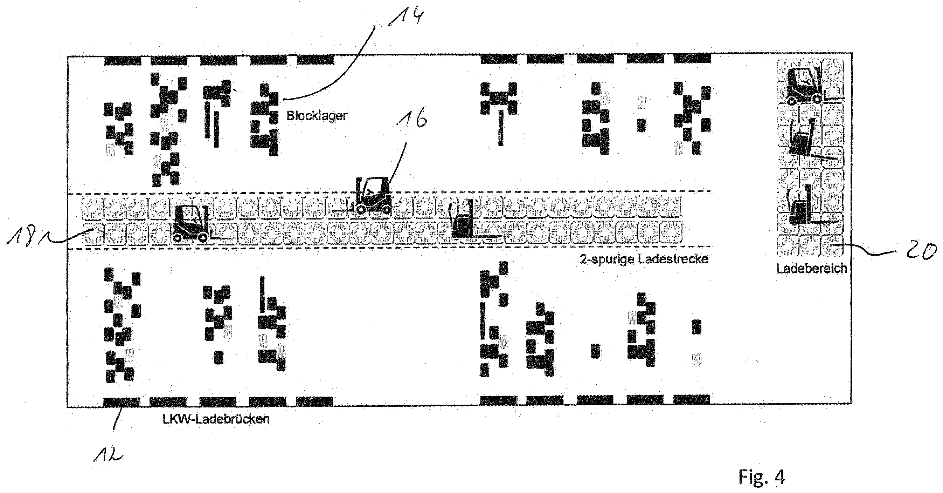

Figur 4 zeigt eine zweite alternative Ausgestaltung eines Lagerbereichs mit Lkw-Ladebrücken 12 und einem Blocklager 14. Flurförderzeuge 16 sind hier in einem zentralen Gangbereich 18 mit induktiven Lademitteln ausgestattet. Ein zweiter Bereich 20 ist ebenfalls mit induktiven Lademitteln ausgestattet, hier werden nicht im Einsatz befindliche Flurförderzeuge geladen.

## Patentansprüche

1. Verfahren zum Anordnen von induktiven Lademitteln in einem Lager, in dem mehrere induktiv ladbare Flurförderzeuge zum Einsatz kommen, wobei
• ein Zielwert für eine mittlere Ladedauer eines in dem Lager eingesetzten Flurförderzeugs vorgegeben wird, wobei die mittlere Ladedauer angibt, für welche Dauer das in dem Lager eingesetzte Flurförderzeug bei durchschnittlicher Verwendung im Mittel geladen werden kann und
**dadurch gekennzeichnet, dass**
• für eines der in dem Lager eingesetzten Flurförderzeuge ein mittlerer Leistungsverbrauch bestimmt wird und bei festgelegter Ladeleistung der Lademittel mit dem Zielwert für die mittlere Ladedauer eine Ladequote für den Einsatz des Fahrzeugs in dem Lager bestimmt wird, wobei mit der bestimmten Ladequote festgelegt wird wie viele induktive Lademittel vorzusehen sind und die festgelegte Anzahl von Lademitteln beginnend mit einem Bereich angeordnet wird, der die höchste mittlere Aufenthaltsdauer besitzt und von da aus mit absteigender mittlerer Aufenthaltsdauer,
• induktive Lademittel derart in dem Lager angeordnet werden, dass das Flurförderzeug bei seinem Einsatz in dem Lager mindestens mit dem Zielwert für die mittlere Ladedauer induktiv geladen werden kann.

2. Verfahren nach Anspruch 1, **dadurch gekennzeichnet, dass** die induktiven Lademittel nach Anzahl und Position derart in dem Lager angeordnet sind, dass das Flurförderzeug bei seinem Einsatz in dem Lager mindestens mit dem Zielwert für die mittlere Ladedauer induktiv geladen werden kann.

3. Verfahren nach Anspruch 1 oder 2, **dadurch gekennzeichnet, dass** die induktiven Lademittel nach ihrer Ladeleistung derart in dem Lager angeordnet sind, dass das Flurförderzeug bei seinem Einsatz in dem Lager mindestens mit einem Zielwert für eine mittlere Ladeleistung induktiv geladen werden kann.

4. Verfahren nach Anspruch 3, **dadurch gekennzeichnet, dass** bei vorhandenen stationären Lademitteln deren Anzahl und/oder eine mittlere Belegung dieser bei der Bestimmung des Zielwerts berücksichtigt werden.

5. Verfahren nach einem der Ansprüche 1 bis 4, **dadurch gekennzeichnet, dass** das Lager in eine Anzahl von Bereichen eingeteilt wird, die nach einem oder mehreren der folgenden Kriterien bestimmt werden:
• Die Bereiche weisen eine örtlich homogen verteilte mittlere Bereichsaufenthaltsdauer auf,
• die Bereiche sind in Funktionsbereiche des Lagers eingeteilt, insbesondere in Bereiche, in denen das Flurförderzeug sich überwiegend stehend oder fahrend aufhält,
• die Bereiche sind in Verlade-, Übergabe- und Verbindungsbereiche aufgeteilt.

6. Verfahren nach einem der Ansprüche 1 bis 5, **dadurch gekennzeichnet, dass** für eine gefundene Anordnung der induktiven Lademittel überprüft wird, ob für das Flurförderzeug der Zielwert der Ladeleistung beim Einsatz im Lager erreicht wird.

7. Verfahren nach einem der Ansprüche 1 bis 6, **dadurch gekennzeichnet, dass** eine Anzahl von stationären Lademitteln derart bestimmt wird, dass eine Anzahl der induktiven Lademittel für den Ladevorgang während des Betriebs unter Beibehaltung des Zielwerts für die mittlere Ladedauer reduziert werden kann.

8. Verfahren nach Anspruch 7, **dadurch gekennzeichnet, dass** die Anzahl der stationären Lademittel nach einem oder mehreren der folgenden Kriterien ermittelt wird:
• Eine Belegung für stationären Lademittel durch Flurförderzeuge berücksichtigt wird,
• eine Anzahl von stationären Lademitteln wird in Abhängigkeit der Gesamtzahl der Flurförderzeuge ermittelt und
• abhängig von dem Zielwert für die mittlere Ladeleistung für die im Betrieb erfolgende induktive Ladung.

9. Lager mit einer Anordnung von induktiven Lademitteln, über die ein in dem Lager eingesetztes Flurförderzeug induktiv geladen werden kann, **dadurch gekennzeichnet, dass** die induktiven Lademittel in dem nach einem der Ansprüche 1 bis 8 hergestellten Lager derart angeordnet sind, so dass die von dem eingesetzten Flurförderzeug erzielte Ladedauer mindestens einem Zielwert entspricht.

10. Lager nach Anspruch 9, **dadurch gekennzeichnet, dass** ein Bodenbereich in dem Lager mit induktiven Lademitteln bedeckt ist, während ein zweiter Bodenbereich in dem Lager frei von induktiven Lademitteln ist.

11. Lager nach Anspruch 9 oder 10, **dadurch gekennzeichnet, dass** der mit induktiven Lademitteln versehene Bodenbereich einen oder mehrere Bereiche aufweist, in denen induktive Lademittel vorgesehen sind.

12. Flurförderzeug mit einem induktiv ladbaren Energiespeicher, der auch bei einem Einsatz des Flurförderzeugs in einem Lager nach einem der Ansprüche 9 bis 11 , mit den induktiven Lademitteln wiederaufladbar ist, **dadurch gekennzeichnet, dass** ein Zielwert für eine mittlere Ladedauer des in dem Lager eingesetzten Flurförderzeugs vorgegeben ist und die Kapazität des Energiespeichers derart bemessen ist, dass das Flurförderzeug bei seinem Einsatz in dem Lager mindestens mit dem Zielwert für die mittlere Ladedauer induktiv geladen werden kann.

13. Flurförderzeug nach Anspruch 12, **dadurch gekennzeichnet, dass** die induktiven Lademittel derart in dem Lager angeordnet sind, dass das Flurförderzeug bei seinem Einsatz in dem Lager mindestens mit dem Zielwert für die mittlere Ladedauer induktiv geladen werden kann.

## Claims

1. A method for arranging inductive charging means in a storage area in which multiple inductively chargeable industrial trucks are used, wherein
• a target value is specified for an average charging time of an industrial truck used in the storage area, wherein the average charging time indicates the period of time for which the industrial truck used in the storage area can be charged on average during ordinary use, and
**characterized in that**
• an average power consumption is determined for one of the industrial trucks used in the storage area and, when the charging capacity of the charging means has been established, a charging quota for using the vehicle in the storage area is determined using the target value for the average charging time, wherein the determined charging quota is used to establish how many inductive charging means are to be provided and the established number of charging means is arranged starting with a region which has the highest average length of stay and from there with decreasing average length of stay,
• inductive charging means are arranged in the storage area in such a way that the industrial truck can be charged at least with the target value for the average charging time when it is being used in the storage area.

2. The method according to claim 1, **characterized in that** the inductive charging means are arranged according to number and position in the storage area in such a way that the industrial truck can be inductively charged at least with the target value for the average charging time when it is being used in the storage area.

3. The method according to claim 1 or 2, **characterized in that** the inductive charging means are arranged according to their charging capacity in the storage area in such a way that the industrial truck can be inductively charged at least with a target value for an average charging capacity when it is being used in the storage area.

4. The method according to claim 3, **characterized in that** the number of charging means in the case of existing stationary charging means and/or an average occupancy of said charging means are taken into account when determining the target value.

5. The method according to any one of claims 1 to 4, **characterized in that** the storage area is divided into a number of regions which are determined according to one or more of the following criteria:
• the regions have a locally homogeneously distributed average region length of stay,
• the regions are divided into functional regions of the storage area, in particular into regions in which the industrial truck is predominantly stationary or moving when staying therein,
• the regions are divided into loading, transfer and connection regions.

6. The method according to any one of claims 1 to 5, **characterized in that,** for an identified arrangement of the inductive charging means, it is checked whether the target value of the charging capacity is achieved for the industrial truck during use in the storage area.

7. The method according to any one of claims 1 to 6, **characterized in that** a number of stationary charging means is determined in such a way that a number of the inductive charging means for the charging process can be reduced during operation while maintaining the target value for the average charging time.

8. The method according to claim 7, **characterized in that** the number of stationary charging means is ascertained according to one or more of the following criteria:
• an occupancy of stationary charging means by industrial trucks is taken into account,
• a number of stationary charging means is ascertained depending on the total number of industrial trucks, and
• depending on the target value for the average charging capacity for the inductive charging taking place during operation.

9. A storage area comprising an arrangement of inductive charging means by means of which an industrial truck used in the storage area can be inductively charged, **characterized in that** the inductive charging means are arranged in the storage area created according to any one of claims 1 to 8 in such a way that the charging time achieved by the industrial truck used corresponds at least to a target value.

10. The storage area according to claim 9, **characterized in that** a floor region in the storage area is covered with inductive charging means, whereas a second floor region in the storage area is free from inductive charging means.

11. The storage area according to claim 9 or 10, **characterized in that** the floor region provided with inductive charging means comprises one or more regions in which inductive charging means are provided.

12. An industrial truck comprising an inductively chargeable energy store which can also be recharged with the inductive charging means when the industrial truck is being used in a storage area according to any one of claims 9 to 11, **characterized in that** a target value is specified for an average charging time of the industrial truck used in the storage area and the capacity of the energy store is such that the industrial truck can be inductively charged at least with the target value for the average charging time when it is being used in the storage area.

13. The industrial truck according to claim 12, **characterized in that** the inductive charging means are arranged in the storage area in such a way that the industrial truck can be inductively charged at least with the target value for the average charging time when it is being used in the storage area.

## Revendications

1. Procédé d'agencement de moyens de recharge inductive dans un entrepôt, sur lequel plusieurs chariots de manutention rechargeables par induction sont utilisés,
• une valeur cible pour une durée de recharge moyenne d'un chariot de manutention utilisé dans l'entrepôt étant spécifiée, la durée de recharge moyenne indiquant la durée pour laquelle le chariot de manutention utilisé dans l'entrepôt peut être rechargé en moyenne lors d'une utilisation moyenne et
**caractérisé en ce que**
• une consommation d'énergie moyenne est déterminée pour un des chariots de manutention utilisés dans l'entrepôt et un taux de charge pour l'utilisation du véhicule dans l'entrepôt est déterminé à l'aide de la valeur cible pour la durée de recharge moyenne, avec puissance de recharge définie, le nombre de moyens de recharge par induction devant être prévus étant défini avec le taux de charge déterminé et le nombre de moyens de recharge défini étant agencé en commençant par une plage qui possède la durée de séjour moyenne la plus élevée et, à partir de celle-ci, avec durée de séjour moyenne décroissante,
• des moyens de recharge par induction sont agencés dans l'entrepôt de telle sorte que le chariot de manutention peut être rechargé par induction au moins avec la valeur cible pour la durée de recharge moyenne, lors de son utilisation dans l'entrepôt.

2. Procédé selon la revendication 1, **caractérisé en ce que** les moyens de recharge par induction sont agencés dans l'entrepôt par nombre et par position de telle sorte que le chariot de manutention peut être rechargé par induction au moins avec la valeur cible pour la durée de recharge moyenne, lors de son utilisation dans l'entrepôt.

3. Procédé selon la revendication 1 ou 2, **caractérisé en ce que** les moyens de recharge par induction sont agencés dans l'entrepôt par leur puissance de recharge de telle sorte que le chariot de manutention peut être rechargé par induction au moins avec une valeur cible pour une durée de recharge moyenne, lors de son utilisation dans l'entrepôt.

4. Procédé selon la revendication 3, **caractérisé en ce que,** en présence de moyens de recharge stationnaires, leur nombre et/ou une occupation moyenne de ceux-ci sont pris en compte lors de la détermination de la valeur cible.

5. Procédé selon l'une des revendications 1 à 4, **caractérisé en ce que** l'entrepôt est divisé en un certain nombre de zones, lesquelles sont déterminées selon un ou plusieurs des critères suivants :
• les zones présentent une durée de séjour par zone moyenne répartie de façon homogène localement,
• les zones sont réparties en zones fonctionnelles de l'entrepôt, en particulier en zones dans lesquelles, principalement, le chariot de manutention séjourne à l'arrêt ou en se déplaçant,
• les zones sont réparties en zone de chargement, zone de transfert et zone de liaison.

6. Procédé selon l'une des revendications 1 à 5, **caractérisé en ce que,** pour un agencement des moyens de recharge par induction retenu, le fait que la valeur cible de la puissance de recharge lors de l'utilisation dans l'entrepôt est atteinte est vérifié pour le chariot de manutention.

7. Procédé selon l'une des revendications 1 à 6, **caractérisé en ce qu**'un certain nombre de moyens de recharge stationnaires est déterminé de telle sorte qu'un certain nombre de moyens de recharge par induction pour le processus de recharge peut être réduit pendant le fonctionnement avec conservation de la valeur cible pour la durée de recharge moyenne.

8. Procédé selon la revendication 7, **caractérisé en ce que** le nombre des moyens de recharge stationnaires est déterminé selon un ou plusieurs des critères suivants :
• une occupation pour des moyens de recharge stationnaires par des chariots de manutention est prise en compte,
• un certain nombre de moyens de recharge stationnaires est déterminé en fonction du nombre total des chariots de manutention, et
• en fonction de la valeur cible pour la puissance de recharge moyenne pour la recharge par induction effectuée pendant le fonctionnement.

9. Entrepôt avec un agencement pour des moyens de recharge par induction, par lesquels un chariot de manutention utilisé dans l'entrepôt peut être rechargé par induction, **caractérisé en ce que** les moyens de recharge par induction dans l'entrepôt établi selon l'une des revendications 1 à 8 sont agencés de telle sorte que la durée de recharge obtenue par le chariot de manutention utilisé correspond au moins à une valeur cible.

10. Entrepôt selon la revendication 9, **caractérisé en ce qu'**une zone de sol dans l'entrepôt est couverte par des moyens de recharge par induction, tandis qu'une deuxième zone de sol dans l'entrepôt est dépourvue de moyens de recharge par induction.

11. Entrepôt selon la revendication 9 ou 10, **caractérisé en ce que** la zone de sol munie de moyens de recharge par induction présente une ou plusieurs zones dans lesquelles des moyens de recharge par induction sont prévus.

12. Chariot de manutention avec un accumulateur d'énergie rechargeable par induction, lequel peut être rechargé avec les moyens de recharge par induction également lors d'une utilisation du chariot de manutention dans un entrepôt selon l'une des revendications 9 à 11, **caractérisé en ce qu'**une valeur cible pour une durée de recharge moyenne du chariot de manutention utilisé dans l'entrepôt est spécifiée et **en ce que** la capacité de l'accumulateur d'énergie est mesurée de telle sorte que le chariot de manutention peut être rechargé au moins avec la valeur cible pour la durée de recharge moyenne lors de son utilisation dans l'entrepôt.

13. Procédé selon la revendication 12, **caractérisé en ce que** les moyens de recharge par induction sont agencés dans l'entrepôt de telle sorte que le chariot de manutention peut être rechargé par induction au moins avec la valeur cible pour la durée de recharge moyenne, lors de son utilisation dans l'entrepôt.
